# EUROPÄISCHE PATENTSCHRIFT

(11) **EP 2 892 770 B1**
(45) Veröffentlichungstag und Bekanntmachung des Hinweises auf die Patenterteilung: **28.12.2016**
(21) Anmeldenummer: 13737212.4
(22) Anmeldetag: 11.07.2013
(51) Int. Cl.: B60T 8/40

(54) **BREMSANLAGE FÜR KRAFTFAHRZEUGE SOWIE VERFAHREN ZUM BETRIEB EINER BREMSANLAGE**
BRAKING SYSTEM FOR MOTOR VEHICLES AND METHOD FOR THE OPERATION OF A BRAKING SYSTEM
INSTALLATION DE FREINAGE POUR VÉHICULES AUTOMOBILES ET PROCÉDÉ POUR FAIRE FONCTIONNER UN SYSTÈME DE FREINAGE

(30) Priorität: 04.09.2012 DE 102012215627
(43) Veröffentlichungstag der Anmeldung: 15.07.2015
(73) Patentinhaber: Continental Teves AG & Co. oHG, 60488 Frankfurt (DE)
(72) Erfinder: FEIGEL, Hans-Jörg, 61191 Rosbach (DE)
(86) Internationale Anmeldenummer: PCT/EP2013/064689
(87) Internationale Veröffentlichungsnummer: WO 2014/037135

(56) Entgegenhaltungen:
- EP-A2- 0 321 700
- WO-A1-2011/029812
- DE-A1-102011 083 237
- US-A- 5 613 740

## Beschreibung

Die Erfindung betrifft eine Bremsanlage für Kraftfahrzeuge gemäß dem Oberbegriff von Anspruch 1 sowie ein Verfahren zum Betrieb einer Bremsanlage gemäß dem Oberbegriff von Anspruch 10.

Es sind hydraulische Fahrzeugbremsanlagen bekannt, welche als Fremdkraftbremsanlagen ausgebildet sind und neben einem muskelkraftbetätigbaren Hauptbremszylinder, an den Radbremsen hydraulisch angeschlossen sind und der Druck und Volumen zum Betätigen von Radbremsen bereitstellt, eine weitere, elektrisch steuerbare Druck- und Volumenbereitstellungseinrichtung umfassen, die in einer "Brake-by-wire"-Betriebsart die Radbremsen ansteuert. Bei Ausfall der elektrisch steuerbaren Druck- und Volumenbereitstellungseinrichtung erfolgt eine Betätigung der Radbremsen allein durch die Muskelkraft des Fahrzeugführers (unverstärkte Rückfallbetriebsart).

Aus der WO 2011/029812 A1 ist eine elektrohydraulische Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In der Rückfallbetriebsart werden die Radbremsen mittels des Bremspedal-betätigbaren Hauptbremszylinders mit dem durch den Fahrer aufgebrachten Druck beaufschlagt.

Aus der DE 10 2011 083 237 A1 ist eine gattungsgemäße Bremsanlage bekannt. Die Bremsanlage umfasst eine mittels eines Bremspedals betätigbare hydraulische Betätigungseinrichtung, an die Radbremsen angeschlossen sind, und einen hydraulischen Wegsimulator mit einem hydraulischen Raum. Die Betätigungseinrichtung ist über eine hydraulische Verbindung mit dem Wegsimulator hydraulisch verbunden, wobei die hydraulische Verbindung über ein stromlos offenes Absperrventil mit einem Druckmittelvorratsbehälter hydraulisch verbunden ist. Zur Änderung der Kraft-Weg-Kennlinie der Bremspedalbetätigung, also zur Änderung des vom Fahrzeugführer empfundenen Bremspedalgefühls, wird Druckmittel zu Beginn der Bremsung, wenn der Bremspedalweg kleiner als ein vorgegebener Grenzwert ist, über das Abtrennventil in den Druckmittelvorratsbehälter abgelassen. Sobald der Bremspedalweg größer als der Grenzwert wird, wird das Absperrventil geschlossen. Bei der vorbekannten Bremsanlage sollte das Absperrventil nicht zu lange geöffnet bleiben, da sonst das Bremspedal "durchfällt", was vom Fahrzeugführer als störend oder irritierend empfunden wird. Das Ansteuern zum Schließen des Abtrennventils ist jedoch mit Geräuschentwicklungen verbunden, die ebenso als störend empfunden werden können. Im Fall eines Stromausfalls, wenn das Absperrventil nicht geschlossen werden kann, oder wenn das Absperrventil undicht ist, kann bei der vorbekannten Bremsanlage bei einer Bremspedalbetätigung das aus der Betätigungseinrichtung verdrängte Druckmittelvolumen in den Druckmittelvorratsbehälter entweichen, so dass z.B. in der Rückfallbetriebsart ein Druckaufbau in den Radbremsen nicht oder nur eingeschränkt möglich ist. Diese sicherheitskritische Situation sollte vermieden werden.

Es ist daher Aufgabe der vorliegenden Erfindung, eine Bremsanlage mit einer veränderbaren Kraft-Weg-Kennlinie der Bremspedalbetätigung sowie ein Verfahren zum Betreiben einer solchen Bremsanlage bereitzustellen, welche/welches gegenüber dem Stand der Technik auf möglichst kostengünstige Weise eine höhere Betriebssicherheit gewährleistet. Außerdem sollte die Bremsanlage möglichst geräuscharm betrieben werden können.

Diese Aufgabe wird erfindungsgemäß durch eine Bremsanlage gemäß Anspruch 1 und ein Verfahren gemäß Anspruch 10 gelöst.

Der Erfindung liegt der Gedanke zugrunde, in der Verbindung zwischen der Simulatorkammer und dem Abtrennventil ein Medientrennmittel anzuordnen, welches die Verbindung zwischen Simulatorkammer und Abtrennventil Druckmittelseitig trennt, so dass Druckmittel nicht unbegrenzt über das Abtrennventil zum Druckmittelvorratsbehälter verschoben werden kann. Hierdurch steht auch bei geöffnetem oder undichtem Abtrennventil eine ausreichende Menge an Druckmittel zur Betätigung der Radbremsen zur Verfügung.

Das Abtrennventil ist bevorzugt stromlos offen ausgeführt, so dass zum Betrieb der Bremsanlage ein Ansteuern zum Schließen des Abtrennventils nicht notwendig ist und so eine zusätzliche Geräuschentwicklung beim Ansteuern des Abtrennventils vermieden wird.
Bevorzugt umfasst das Medientrennmittel einen ersten hydraulischen Raum zur Aufnahme von Druckmittel, wobei der erste Raum mittels eines begrenzt bewegbaren oder deformierbaren Medientrennelements von einem zweiten hydraulischen Raum getrennt ist. Der zweite Raum ist mit dem Abtrennventil hydraulisch verbunden. Hierdurch kann das vom Druckraum des Hauptbremszylinders kommende Druckmittel in dem ersten Raum aufgenommen werden. Die Kraft-Weg-Kennlinie der Bremspedalbetätigung ist somit einfach im Fahrbetrieb umschaltbar. Das im ersten Raum aufnehmbare Druckmittelvolumen wird jedoch durch das Medientrennelement begrenzt und entsprechend wird auch das aus dem zweiten Raum verdrängbare und in den Druckmittelvorratsbehälter verschiebbare Druckmittelvolumen begrenzt.

Gemäß einer bevorzugten Ausführungsform der Erfindung ist das Medientrennmittel als eine Zylinder-Trennkolben-Anordnung ausgeführt, wobei das Medientrennelement der Trennkolben ist. Das Medientrennmittel lässt sich so einfach und kostengünstig als ein in einer weiteren Bohrung im Gehäuse der Bremsanlage geführter Trennkolben realisieren. Besonders bevorzugt sind die Dichtelemente zur hydraulischen Trennung des ersten und zweiten Raums gehäusefest angeordnet.

Bevorzugt ist in dem zweiten Raum ein elastisches Element angeordnet, an welchem sich der Trennkolben abstützt. So wirkt bei geöffnetem Abtrennventil der erste Raum des Medientrennmittels wie ein zusätzliches Aufnahmevolumen der Simulationseinrichtung, wobei die Steifigkeit des elastischen Elements des Medientrennmittels unterschiedlich von der Steifigkeit des elastischen Elements der Simulationseinrichtung gewählt werden kann, wodurch eine Kraft-Weg-Kennlinie mit unterschiedlichen Steigungen erreicht werden kann. Besonders bevorzugt ist das elastische Element vorgespannt, um den Trennkolben in einer Simulationseinrichtungsseitigen Stellung zu halten.

Auch ist es bevorzugt, dass das Medientrennmittel eine elastische Membran umfasst. Durch geeignete Wahl der Geometrie und Ausformung der Membran ist so ein beliebiges Ansprechverhalten bzw. Druckmittelvolumenaufnahmeverhalten des Medientrennmittels vorgebbar. Die Membran ist besonders bevorzugt, alternativ zu einem Trennkolben, als Medientrennelement ausgebildet. So kann die elastische Membran in einer Bohrung angeordnet sein und den ersten von dem zweiten Raum trennen.

Gemäß einer bevorzugten Ausführungsform der Erfindung ist das Abtrennventil in einer zweiten hydraulischen Verbindung zwischen dem Druckraum und dem Druckmittelvorratsbehälter angeordnet. Das Abtrennventil kann so nicht nur zur Veränderung der Bremspedalcharakteristik sondern auch als Diagnoseventil genutzt werden. Es ist somit nur ein zusätzliches Ventil notwendig, und nicht ein Diagnoseventil in der hydraulischen Verbindung zwischen Druckraum und Druckmittelvorratsbehälter sowie ein Abtrennventil in der Verbindung zwischen Simulatorkammer und Druckmittelvorratsbehälter.

Bevorzugt steht die Simulatorkammer mit der zweiten hydraulischen Verbindung zwischen dem Druckraum und dem Abtrennventil in Verbindung.

Die erste hydraulische Verbindung zwischen Simulatorkammer und Druckraum des Hauptbremszylinders ist bevorzugt mittels eines elektrisch betätigbaren Simulatorfreigabeventils zu- und abschaltbar ausgeführt, d.h. die Wirkung der Simulationseinrichtung ist mittels des Simulatorfreigabeventils zu- und abschaltbar. Hierdurch kann ein Abfließen von Druckmittel aus dem Druckraum in die Simulatorkammer und/oder das Medientrennmittel gänzlich verhindert werden. Besonders bevorzugt ist das Simulatorfreigabeventil stromlos geschlossen ausgeführt, damit bei einem Stromausfall Druckmittel von dem Druckraum direkt in die Radbremsen verschoben werden kann. In der Rückfallbetriebsart ist die Simulationseinrichtung vorteilhafterweise abgeschaltet.

Bevorzugt ist der Druckraum über in dem Kolben ausgebildete radiale Bohrungen und die zweite Verbindung mit dem Druckmittelvorratsbehälter verbunden. Besonders bevorzugt wird die Verbindung über die radialen Bohrungen bei einer Betätigung des Bremspedals unterbrochen.

Bevorzugt umfasst die Bremsanlage ein elektrisch betätigbares, insbesondere stromlos offenes, Trennventil, insbesondere je Bremskreis, zum Trennen des Druckraums von dem Bremskreis.

Bevorzugt umfasst die Bremsanlage ein elektrisch betätigbares, insbesondere stromlos geschlossenes, Zuschaltventil, insbesondere je Bremskreis, zur hydraulischen Verbindung der Druckbereitstellungseinrichtung mit dem Bremskreis.

Ebenso umfasst die Bremsanlage bevorzugt ein elektrisch betätigbares, stromlos offenes Einlassventil und ein elektrisch betätigbares, stromlos geschlossenes Auslassventil je Radbremse zum Einstellen radindividueller Bremsdrücke.

Bevorzugt umfasst die Bremsanlage ein Einlassventil und ein Auslassventil pro Radbremse zum Einstellen radindividueller Bremsdrücke, die aus den Bremskreisen zugeordneten Bremskreisdrücken abgeleitet werden, wobei die Einlassventile im nicht angesteuerten Zustand den Bremskreisdruck zu den Radbremsen weiterleiten und im angesteuerten Zustand einen Radbremsdruckaufbau begrenzen oder verhindern, und wobei die Auslassventile im nicht angesteuerten Zustand ein Abströmen von Druckmittel aus den Radbremsen in einen Druckmittelvorratsbehälter verhindern und im angesteuerten Zustand zulassen und kontrollieren, wobei die Einlassventile geschlossen werden, so dass ein Radbremsdruckabbau erfolgt.

Das Trennventil ist jeweils bevorzugt in einer hydraulischen Verbindungsleitung zwischen dem Druckraum und dem Bremskreis bzw. der Bremskreisversorgungsleitung angeordnet und ermöglicht so ein wahlweises Verschließen oder Öffnen der hydraulischen Verbindung zwischen Druckraum und Bremskreis. Die Trennventile sind besonders bevorzugt stromlos offen ausgeführt, damit die Bremskreise in einer stromlosen Rückfallbetriebsart hydraulisch mit dem Hauptbremszylinder verbunden sind und so vom Fahrzeugführer mit Druck beaufschlagt werden können.

Das Zuschaltventil ist jeweils bevorzugt in einer hydraulischen Verbindungsleitung zwischen der Druckbereitstellungseinrichtung und dem Bremskreis bzw. der Bremskreisversorgungsleitung angeordnet und ermöglicht so ein wahlweises Öffnen oder Verschließen der hydraulischen Verbindung zwischen Druckbereitstellungseinrichtung und Bremskreis. Besonders bevorzugt sind die Zuschaltventile stromlos geschlossen ausgeführt, damit der Bremskreis in einer stromlosen Rückfallbetriebsart hydraulisch von der ersten Druckbereitstellungseinrichtung getrennt ist.

Bevorzugt wird die elektrisch steuerbare Druckbereitstellungseinrichtung durch eine Zylinder-Kolben-Anordnung gebildet, deren Kolben durch einen elektromechanischen Aktuator betätigbar ist. Ein solcher elektrohydraulischer Aktuator arbeitet besonders dynamisch, sehr leise und verträgt problemlos die für Bremsanlagen erforderlichen Lastwechselzahlen.

Die Bremsanlage umfasst weiterhin bevorzugt zumindest einen Drucksensor zur Erfassung eines Druckes des Hauptbremszylinders und einen Drucksensor zur Erfassung des Druckes der Druckbereitstellungseinrichtung. Weiterhin umfasst die Bremsanlage vorteilhafterweise einen Weg- oder Winkelsensor zur Erfassung einer Lage oder Position der Druckbereitstellungseinrichtung sowie einen Weg- oder Winkelsensor zur Erfassung einer Bremspedalbetätigung. Die Signale der vier genannten Sensoren werden bevorzugt von der elektronischen Steuer- und Regeleinheit verarbeitet.

Die Erfindung betrifft auch ein Verfahren zum Betrieb einer Bremsanlage. Hierbei wird auch bei offenem Abtrennventil die Menge von in den Druckmittelvorratsbehälter verschobenem Druckmittel durch ein zwischen der Simulatorkammer und dem Abtrennventil angeordnetes Medientrennmittel auf eine vorgegebene Maximalmenge begrenzt.
Bevorzugt wird bei Vorliegen einer vorgegebenen Bedingung das Abtrennventil bei einer Betätigung des Bremspedals während der gesamten Bremsung nicht geschlossen. So werden Schaltgeräusche des Abtrennventils vermieden. Auf ein Schließen des Abtrennventils kann nur deshalb verzichtet werden, weil auch bei offenem Abtrennventil die in den Druckmittelvorratsbehälter verschobene Druckmittelmenge begrenzt ist. Besonders bevorzugt wird bei Wahl einer ersten Auswahlmöglichkeit durch den Fahrzeugführer über eine HMI-Schnittstelle das Abtrennventil nicht geschlossen. Die erste Wahlmöglichkeit entspricht vorteilhafterweise einer Einstellung der Bremsanlage ("Komforteinstellung") mit einem flachen Verlauf der Kraft-Weg-Kennlinie bei kleinen Bremspedalwegen.

Bei Vorliegen einer vorgegebenen Bedingung wird das Abtrennventil bei einer Betätigung des Bremspedals bevorzugt unmittelbar geschlossen und bleibt besonders bevorzugt während der gesamten Bremsung geschlossen. So wird eine Aufnahme von Druckmittel in dem Medientrennmittel verhindert und das Druckmittel von der Simulationseinrichtung aufgenommen. Das Bremspedalgefühl wird somit von dem elastischen Element der Simulationseinrichtung bestimmt. Besonders bevorzugt wird bei Wahl einer zweiten Auswahlmöglichkeit durch den Fahrzeugführer über eine HMI-Schnittstelle das Abtrennventil sofort geschlossen. Die zweite Wahlmöglichkeit entspricht vorteilhafterweise einer Einstellung der Bremsanlage ("Sporteinstellung") mit einem stärker ansteigenden Verlauf der Kraft-Weg-Kennlinie bei kleinen Bremspedalwegen als bei der Komforteinstellung. Die zweite Auswahlmöglichkeit führt also zu einer Bremspedalwegverkürzung bei gleicher aufgebrachter Bremspedalbetätigungskraft. Gemäß einer bevorzugten Ausführungsform der Erfindung wird bei einer Betätigung des Bremspedals zur Verkürzung des Bremspedalwegs das Abtrennventil bevorzugt in Abhängigkeit von einer Wahl des Fahrzeugführers über eine HMI-Schnittstelle und/oder in Abhängigkeit von einer fahrdynamischen Größe und/oder in Abhängigkeit von einem Signal einer Steuer- und/oder Regeleinheit des Kraftfahrzeugs geschlossen. Besonders bevorzugt wird die Fahrzeuggeschwindigkeit und/oder die Bremspedalbetätigungsgeschwindigkeit als fahrdynamische Größe berücksichtigt. Ebenso ist es besonders bevorzugt, dass es sich bei der Steuer- und/oder Regeleinheit des Kraftfahrzeugs, um eine Steuer- und/oder Regeleinheit handelt, in der eine Gefahrenerkennung durchgeführt wird. Z.B. bei hohen Fahrzeuggeschwindigkeiten und/oder hohen Bremspedalbetätigungsgeschwindigkeiten (Notbremsung) und/oder einer erkannten Gefahr (z.B. Fußgänger auf der Fahrbahn) wird das Abtrennventil vorteilhafterweise geschlossen, damit der Fahrzeugführer nur einen möglichst kurzen Bremspedalweg zurückzulegen braucht.

Weitere bevorzugte Ausführungsformen der Erfindung ergeben sich aus den Unteransprüchen und der nachfolgenden Beschreibung anhand von Figuren.

### Es zeigen schematisch

- Fig. 1: ein Ausführungsbeispiel einer erfindungsgemäßen Bremsanlage,
- Fig. 2: eine Bremsanlage, und
- Fig. 3: beispielhafte Kennlinien zur Darstellung verschiedener Bremspedalgefühle.

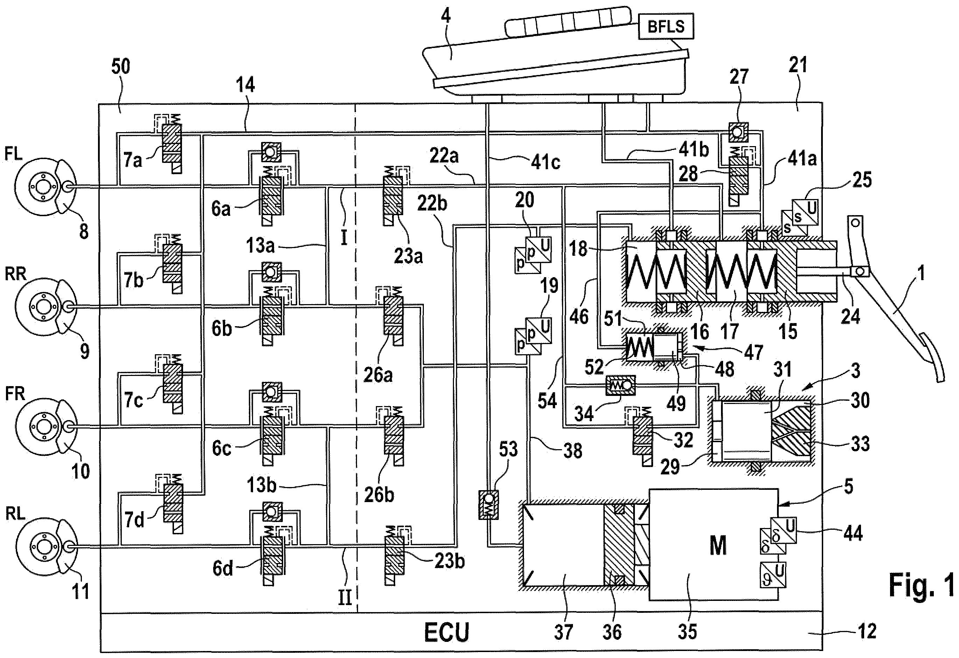

In Fig. 1 ist ein Ausführungsbeispiel einer erfindungsgemäßen Bremsanlage schematisch dargestellt. Die Bremsanlage umfasst im Wesentlichen eine mittels eines Betätigungs- bzw. Bremspedals 1 betätigbare hydraulische Betätigungseinheit 2, einen mit der hydraulischen Betätigungseinheit 2 zusammen wirkenden Wegsimulator bzw. Simulationseinrichtung 3, einen der hydraulischen Betätigungseinheit 2 zugeordneten, unter Atmosphärendruck stehenden Druckmittelvorratsbehälter 4, eine elektrisch steuerbare Druckbereitstellungseinrichtung 5, eine elektronische Steuer- und Regeleinheit 12 und eine elektrisch steuerbare Druckmodulationseinrichtung 50.

Druckmodulationseinrichtung 50 umfasst beispielsgemäß je Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an einen Druckraum 37 der elektrisch steuerbaren Druckbereitstellungseinrichtung 5 angeschlossenen Systemdruckleitung 38 vorliegt. Den Einlassventilen 6a-6d ist jeweils ein zu den Bremskreisversorgungsleitungen 13a, 13b hin öffnendes, nicht näher bezeichnetes Rückschlagventil parallel geschaltet. In einer unverstärkten Rückfallbetriebsart werden die Bremskreisversorgungsleitungen 13a, 13b über hydraulische Leitungen 22a, 22b mit den Drücken der Druckräume 17, 18 der Betätigungseinheit 2 beaufschlagt. Die Ausgangsanschlüsse der Auslassventile 7a-7d sind über eine Rücklaufleitung 14 mit dem Druckmittelvorratsbehälter 4 verbunden. Zum Erfassen des in der Systemdruckleitung 38 herrschenden Druckes ist ein vorzugsweise redundant ausgeführter Drucksensor 19 vorgesehen. Beispielsgemäß sind die Radbremsen 8 bzw. 9 dem linken Vorderrad bzw. dem rechten Hinterrad und die Radbremsen 10 bzw. 11 dem rechten Vorderrad bzw. dem linken Hinterrad zugeordnet. Andere Kreisaufteilungen sind ebenso denkbar.

Die Einlass- und Auslassventile 6a-6d, 7a-7d und ggf. Teile der Bremskreisversorgungsleitungen 13a, 13b und Teile der Rücklaufleitung 14 können zu einem eigenständigen elektrohydraulischen Modul zusammen gefasst werden und bilden dann die Druckmodulationseinrichtung 50, die in Fig. 1 stark schematisch durch die gestrichelte Linie angedeutet ist.

Die hydraulische Betätigungseinheit 2 weist in einem Gehäuse 21 zwei hintereinander angeordnete Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Druckmodulationseinheit 50 an die Betätigungseinheit 2 angeschlossen ist. Dabei ist in der Druckausgleichsleitung 41a eine Parallelschaltung eines stromlos offenen (SO-) Abtrennventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

Abtrennventil 28, welches auch als Diagnoseventil bezeichnet werden kann, kann dazu genutzt werden, bei unbetätigtem Bremspedal 1 die hydraulische Verbindung zwischen Druckraum 17 und Druckmittelvorratsbehälter 4 zu trennen, um so z.B. für eine Leckageüberwachung einen aktiven Bremsdruckaufbau im Hauptbremszylinder 2 mittels der Druckbereitstellungseinrichtung 5 durchzuführen.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-), 2/2-Wegeventil ausgebildet ist. Durch die Trennventile 23a, 23b kann die hydraulische Verbindung zwischen den Druckräumen 17, 18 und den Bremskreisversorgungsleitungen 13a, 13b bzw. der Druckmodulationseinheit 50 abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Die elektrisch steuerbare Druckbereitstellungseinrichtung 5 ist als eine hydraulische Zylinder-Kolben-Anordnung bzw. ein einkreisiger elektrohydraulischer Aktuator (Linearaktuator) ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden. Der Kolben 36 begrenzt einen Druckraum 37.

Der durch die Kraftwirkung des Kolbens 36 auf das im Druckraum 37 eingeschlossene Druckmittel erzeugte Aktuatordruck wird in die Systemdruckleitung 38 eingespeist und mit dem Systemdrucksensor 19 erfasst. In der "Brake-by-Wire"-Betriebsart wird die Systemdruckleitung 38 über die Zuschaltventile 26a, 26b mit den Bremskreisversorgungsleitungen 13a, 13b verbunden. Auf diesem Weg erfolgt bei einer Normalbremsung ein Radbremsdruckauf- und -abbau für alle Radbremsen 8, 9, 10, 11. Beim Druckabbau strömt dabei das vorher aus dem Druckraum 37 des Aktuators 5 in die Radbremsen 8, 9, 10, 11 verschobene Druckmittel auf dem gleichen Wege wieder in den Druckraum 37 des Aktuators 5 zurück. Dagegen strömt bei einer Bremsung mit radindividuell unterschiedlich, mit Hilfe der Modulationsventile 6a-6d, 7a-7d geregelten Radbremsdrücken der über die Auslassventile 7a-7d abgelassene Druckmittelanteil in den Druckmittelvorratsbehälter 4. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Behälter 4 über die Leitung 41c mit einem als in Strömungsrichtung zum Aktuator öffnendes Rückschlagventil ausgebildeten Nachsaugventil 53 in den Akuatordruckraum 37 strömen kann.

Simulationseinrichtung 3 ist hydraulisch an den Hauptbremszylinder 2 angekoppelt und beispielsweise als eine eigenständige Baugruppe ausgebildet, die im Wesentlichen aus einer Simulatorkammer 29, einer Simulatorrückkammer 30 sowie einem die beiden Kammern 29, 30 voneinander trennenden Simulatorkolben 31 besteht. Simulatorkolben 31 stützt sich durch ein in Simulatorrückkammer 30 angeordnetes elastisches Element 33 (z.B. Simulatorfeder) am Gehäuse 21 ab. Die Simulatorkammer 29 ist beispielsgemäß mittels eines elektrisch betätigbaren Simulatorfreigabeventils 32 mit dem ersten Druckraum 17 des Tandemhauptbremszylinders 2 verbindbar (über Leitungsabschnitt 54). Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die Simulatorkammer 29 der Simulationseinrichtung 3 ist außerdem über eine hydraulische Verbindungsleitung 46, in welcher ein Medientrennmittel 47 angeordnet ist, mit dem Hauptbremszylinderseitigen Anschluss des Abtrennventils 28 (Druckausgleichsleitung 41a) (wirk)verbunden.

Medientrennmittel 47 ist beispielsgemäß als eine Zylinder-Trennkolben-Anordnung 47 ausgebildet, welche einen, z.B. in dem Gehäuse 21 geführten, verschiebbaren Kolben 49 als Medientrennelement aufweist, der zwei hydraulische Räume 48, 51 voneinander trennt. Der erste Raum 48 ist mit der Simulatorkammer 29 hydraulisch verbunden, der zweite Raum 51 ist mit dem Abtrennventil 28 hydraulisch verbunden. Vorteilhafterweise ist in dem zweiten Raum 51 ein elastisches Element 52 (z.B. eine Feder) angeordnet, über welches sich Kolben 49 an Gehäuse 21 abstützt. Um den Kolben in einer Ruhestellung zu halten, ist das elastische Element 52 vorgespannt.

Das Medientrennmittel kann alternativ (oder zusätzlich) auch eine elastische Membran als Medientrennelement umfassen, welche zwei hydraulische Räume 48, 51 voneinander trennt.

Wenn das Abtrennventil 28 in der "Brake-by-wire"-Betriebsart geöffnet ist, stellt der Raum 48 ein zusätzliches Druckmittelaufnahmevolumen (zu der Simulationseinrichtung 3) dar, dessen maximales Aufnahmevolumen jedoch begrenzt ist (durch den (linksseitigen) "Anschlag" des Kolbens 49 im Gehäuse 21 oder durch die maximale Ausdehnung/Verformung der elastischen Membran). Durch das Medientrennmittel 47 wird die hydraulische Verbindung zwischen Druckraum 17 und Druckmittelvorratsbehälter 4 unterbrochen und das Verschieben von Druckmittel aus dem Druckraum 17 in den Druckmittelvorratsbehälter 4 auf ein dem Volumen der ersten Raums 48 entsprechendes Volumen begrenzt. Sollte das Abtrennventil 28 undicht sein, so kann nur das begrenzte Volumen des Medientrennmittels 47 in den Druckmittelvorratsbehälter 4 entweichen.

In der Normalbremsfunktion der Bremsanlage ("Brake-by-wire"-Betriebsart) ist Hauptbremszylinder 2, und damit der Fahrzeugführer, von den Radbremsen 8, 9, 10, 11 durch die geschlossenen Trennventile 23a, 23b entkoppelt und die Bremskreisversorgungsleitungen 13a, 13b sind über die geöffneten Zuschaltventile 26a, 26b mit der Druckbereitstellungseinrichtung 5 verbunden, welche den Systemdruck zur Betätigung der Radbremsen 8, 9, 10, 11 bereitstellt. Simulationseinrichtung 3 ist durch das geöffnete Simulatorfreigabeventil 32 zugeschaltet, so dass das durch die Betätigung des Bremspedals 1 durch den Fahrer im Hauptbremszylinder 2 verdrängte Druckmittelvolumen durch die Simulationseinrichtung 3 aufgenommen wird und die Simulationseinrichtung 3 dem Fahrzeugführer ein gewohntes Bremspedalgefühl vermittelt.

In einer Rückfallbetriebsart der Bremsanlage, z.B. bei einem Ausfall der elektrischen Energieversorgung der gesamten Bremsanlage, ist Simulationseinrichtung 3 durch das stromlos geschlossene Simulatorfreigabeventil 32 abgeschaltet und die Druckbereitstellungseinrichtung 5 ist durch die stromlos geschlossenen Zuschaltventile 26a, 26b von den Bremskreisversorgungsleitungen 13a, 13b getrennt. Hauptbremszylinder 2 ist über die Leitungen 22a, 22b mit den stromlos offenen Trennventilen 23a, 23b mit den Bremskreisversorgungsleitungen 13a, 13b und damit den Radbremsen 8, 9, 10, 11 verbunden, so dass der Fahrzeugführer durch Betätigung des Bremspedals 1 direkt Druck in den Radbremsen 8, 9, 10, 11 aufbauen kann.

Der Ansteuerung der elektrisch betätigbaren Komponenten der Bremsanlage, insbesondere der Ventile 23a, 23b, 26a, 26b, 28, 32 und des Elektromotors 35 der Druckbereitstellungseinrichtung 5, dient die elektronische Steuer- und Regeleinheit 12. Steuer- und Regeleinheit 12 ist auch für die Ansteuerung der Druckmodulationseinrichtung 50 ausgelegt. Die Signale der Sensoren 19, 20, 25 und 44 werden ebenso in der elektronische Steuer- und Regeleinheit 12 verarbeitet.

Generell ergibt sich bei der Bremsanlage der Fig. 1, wenn zunächst die Verbindung 46 außer Acht gelassen wird, das für den Fahrer erlebbare Bremspedalgefühl in der "Brake-by-wire"-Betriebsart aus der statischen und dynamischen Charakteristik der mechanisch voreingestellten Pedalkraft-Pedalweg-Kennlinie und der statischen und dynamischen Charakteristik der vorgebbaren Pedalweg-Verzögerungs-Kennlinie. Die Pedalkraft-Pedalweg-Kennlinie wird im Wesentlichen durch die Steifigkeit des elastischen Elements 33 der Simulationseinrichtung 3 sowie die Summe aller Reibungs- und Drosseleffekte bestimmt. Die Pedalweg-Verzögerungs-Kennlinie wird im Wesentlichen durch eine in der elektronische Steuer- und Regeleinheit 12 vorgebbare Funktion bestimmt, welche den Zusammenhang zwischen der vom Fahrzeugführer eingesteuerten Bremspedalbetätigung (dargestellt durch den Bremspedalweg oder Bremspedalwinkel oder Weg des Kolbens 15) und dem durch die Druckbereitstellungseinrichtung 5 einzustellenden Sollsystemdruck wiedergibt. Optional können auch noch weitere Größen zur Bestimmung des Sollsystemdrucks herangezogen werden, wie z.B. die Bremspedalbetätigungsgeschwindigkeit oder der Druck im Hauptbremszylinder 2.

Die Darstellung von verschiedenen, insbesondere umschaltbaren, Bremspedalgefühlvorgaben (z.B. einer "Sport"- oder einer "Komfort"-Einstellung) kann prinzipiell über ein Verstellung der Pedalweg-Verzögerungs-Kennlinie erfolgen, die softwareseitig leicht zu realisieren ist. Dabei kann jedoch in der Regel nur eine der Einstellungen der Pedalweg-Verzögerungs-Kennlinie stimmig auf die voreingestellte Pedalkraft-Pedalweg-Kennlinie abgestimmt werden. Erfolgt eine Abstimmung beispielsweise für eine erste Pedalweg-Verzögerungs-Kennlinie (z.B. die "Komfort"-Pedalweg-Verzögerungs-Kennlinie), so wird die zweite Pedalweg-Verzögerung-Kennlinie (z.B. die "Sport"-Pedalweg-Verzögerungs-Kennlinie) durch eine höhere Soll-Verzögerung bei kürzeren Bremspedalwegen erreicht. Die höhere Verzögerung passt dann aber nicht zur Pedalkraft, da hier eine höhere Reaktionskraft vom Fahrzeugführer erwartet wird.

Die erfindungsgemäße Bremsanlage bzw. das erfindungsgemäße Verfahren bietet den Vorteil einer zusätzlichen Umstellung bzw. Änderung der Pedalkraft-Pedalweg-Kennlinie, so dass die zweite Pedalkraft-Pedalweg-Kennlinie entsprechend harmonisch auf die zweite Pedalweg-Verzögerungs-Kennlinie abgestimmt werden kann. Dabei kommt die Erfindung ohne zusätzliche Aktuatorik aus.

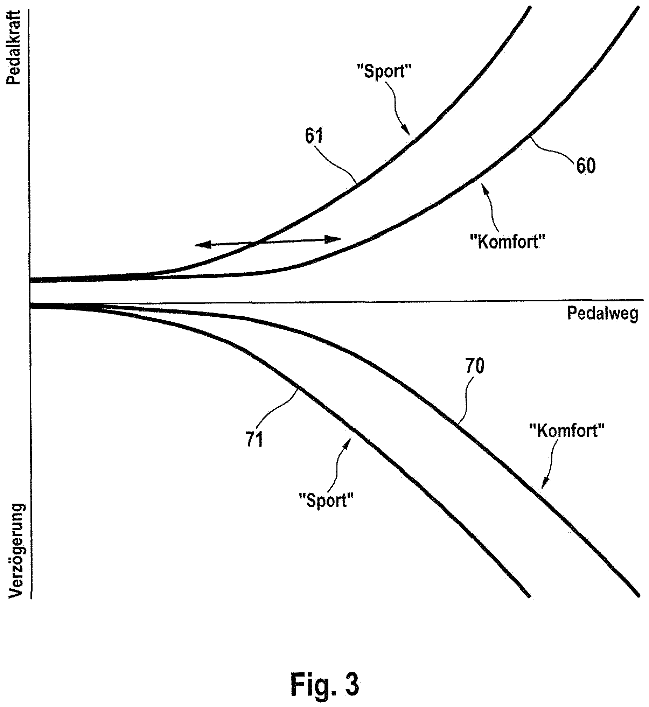

In Fig. 3 sind beispielhafte Kennlinien zur Darstellung zweier Bremspedalgefühlvorgaben, einer "Sport"- Einstellung und einer "Komfort"-Einstellung, dargestellt. Auf der x-Achse ist der Pedalweg oder eine entsprechende Größe (wie z.B. der Weg des Kolbens 15) aufgetragen. Im oberen Teil der Fig. 3 ist auf der y-Achse die Pedalkraft aufgetragen, entsprechend zeigt der oberen Teil der Fig. 3 die Pedalkraft-Pedalweg-Kennlinie 60 für die "Komfort"-Einstellung und die Pedalkraft-Pedalweg-Kennlinie 61 für die "Sport"-Einstellung. Eine Umschaltung zwischen den beiden Pedalkraft-Pedalweg-Kennlinien wird anhand des Abtrennventils 28 vorgenommen, wie weiter unten noch genauer ausgeführt ist. Im unteren Teil der Fig. 3 ist auf der y-Achse die Fahrzeugverzögerung aufgetragen und entsprechend sind die Pedalweg-Verzögerungs-Kennlinie 70 für die "Komfort"-Einstellung und die Pedalweg-Verzögerungs-Kennlinie 71 für die "Sport"-Einstellung dargestellt. Den Pedalweg-Verzögerungs-Kennlinien entsprechende Funktionen zur Bestimmung des Sollsystemdrucks in Abhängigkeit von dem Pedalweg sind z.B. in der elektronischen Steuer- und Regeleinheit 12 abgelegt.

Grundsätzlich wäre eine elektromechanische Verstellung der Pedalkraft-Pedalweg-Kennlinie denkbar, diese sind aber wegen der zusätzlichen Aktuatorik mit erheblichen Mehrkosten verbunden.

Eine umschaltbare Pedalkraft-Pedalweg-Kennlinie in der "Brake-by-wire"-Betriebsart, d.h. bei geöffnetem Simulatorfreigabeventil 32, wird bevorzugt durch Nutzung des zur Diagnosefähigkeit der Bremsanlage vorhandenen Abtrennventils 28 erreicht.

Bevorzugt sind das Medientrennmittel 47, insbesondere dessen Druckmittelaufnahmevolumen in Raum 48 und das elastische Element 52, sowie die Simulationseinrichtung 3, insbesondere deren elastisches Element 33, derart ausgelegt, dass sie bei geöffnetem Abtrennventil 28 die "Komfort"-Einstellung abbilden bzw. darstellen. Dann ist in der "Komfort"-Einstellung, welche üblicherweise die Default-Einstellung darstellt, kein Schalten des Abtrennventils 28 notwendig. Bei einer Betätigung des Bremspedals 1 wird das Simulatorfreigabeventil 32 geöffnet, so dass bei offenem Abtrennventil 28 zunächst ein begrenztes Volumen an Druckmittel in den ersten Raum 48 und dann auch in die Simulatorkammer 29 verschoben wird. Bei einer Betätigung des Bremspedals 1 wird dann also in der "Komfort"-Einstellung während der gesamten Bremsung das Abtrennventil 28 nicht geschlossen.

Ist ein anderes Bremspedalgefühl mit verkürztem Bremspedalweg gewünscht, z.B. die "Sport"-Einstellung oder auch eine Einstellung zwischen "Komfort"-Einstellung und "Sport"-Einstellung, so wird, z.B. direkt bei Beginn der Bremspedalbetätigung oder auch zeitlich versetzt, das Abtrennventil geschlossen, so dass nur die Simulationseinrichtung 3 Druckmittel aufnimmt. Z.B. wird bei der "Sport"-Einstellung das Abtrennventil 28 bei einer Betätigung des Bremspedals unmittelbar geschlossen und bleibt vorteilhafterweise während der gesamten Bremsung geschlossen.

Bevorzugt wird abhängig von der Einstellung eines Wahlschalters bzw. der Wahl durch den Fahrzeugführer über eine HMI-Schnittstelle (z.B. erste Auswahlmöglichkeit "Komfort", zweite Auswahlmöglichkeit "Sport") das Abtrennventil 28 zur Verkürzung des Pedalwegs geschaltet.

Alternativ oder zusätzlich wird das Abtrennventil 28 zur Verkürzung des Pedalwegs abhängig von ein oder mehreren fahrdynamischen Größen, wie z.B. der Fahrgeschwindigkeit, der Pedalbetätigungsgeschwindigkeit, und/oder auch anderen Signalen (z.B. Fußgängerschutz-Gefahrenbremsungsauslösung) geschaltet. Z.B. kann das Abtrennventil 28 in Abhängigkeit von einem Signal einer Steuer- und/oder Regeleinheit des Kraftfahrzeugs geschaltet werden, in welcher eine Gefahrenerkennung durchgeführt wird, so dass bei einer Betätigung des Bremspedals und erkannter Gefahrenbremsung das Abtrennventil 28 zur Verkürzung des Bremspedalwegs geschlossen wird.

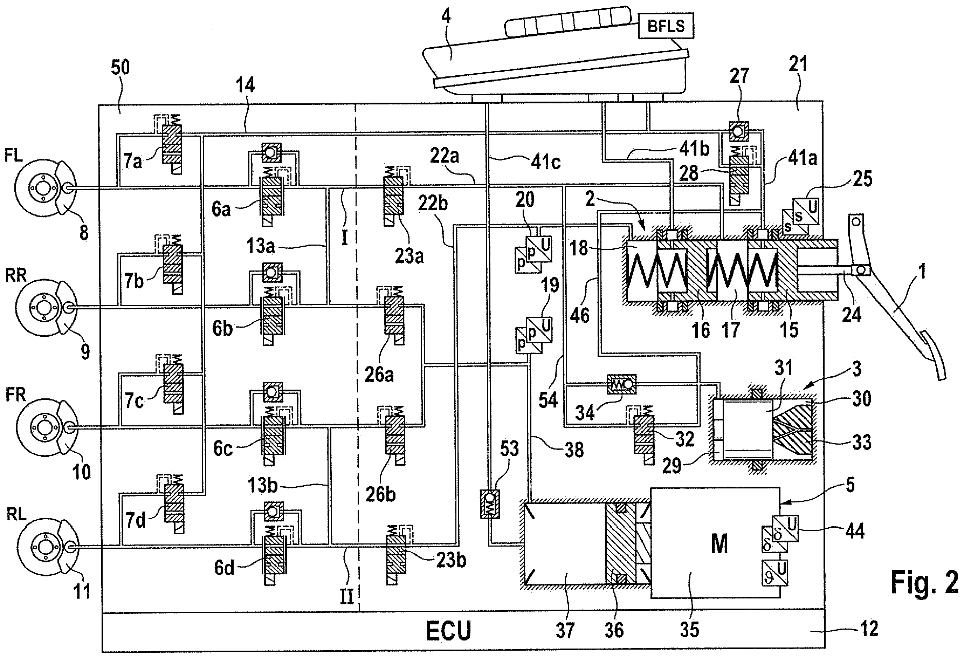

In Fig. 2 ist eine alternative Bremsanlage schematisch dargestellt. Das zweite Ausführungsbeispiel entspricht dem ersten Ausführungsbespiel ohne das Medientrennmittel 47, d.h. bei geöffnetem Abtrennventil 28 in der "Brake-by-wire"-Betriebsart besteht eine hydraulische Verbindung zwischen Druckraum 17 und Druckmittelvorratsbehälter 4.

Bei der Bremsanlage weist die Kennlinie der Simulatorfeder 33 eine geringe Anfangs-Volumenaufnahme auf (erste Pedalkraft-Pedalweg-Kennlinie), welche z.B. einer "Sport"-Einstellung entspricht. Diese wird wirksam, in dem das Abtrennventil 28, das hydraulisch eingangsseitig über die Verbindungsleitung 46 mit der Simulatorkammer 29 verbunden ist, bei einer Bremspedalbetätigung sofort geschlossen wird.

Bei einem späteren, pedalweg-gesteuerten Schließen des Abtrennventils 28 erhält man eine "Komfort"-Einstellung, da zunächst, solange das Abtrennventils 28 geöffnet ist, Druckmittelvolumen über das Abtrennventil 28 in den Vorratsbehälter 4 verdrängt wird und damit die Kennlinie (zweite Pedalkraft-Pedalweg-Kennlinie) einen im Anfangsbereich länger flachen Verlauf erhält.
Nachteilig ist bei der Bremsanlage der Fig. 2, dass auch für die "Komfort"-Einstellung, um nicht zu viel Druckmittel zu "verlieren", ein Schalten (Schließen) des Abtrennventils 28 notwendig ist, was für den Fahrzeugführer akustisch störend sein kann. Außerdem würde der Fahrzeugführer ohne Gegenkraft Druckmittel aus dem Hauptbremszylinder 2 in den Vorratsbehälter 4 verschieben, sollte das Abtrennventil 28 undicht sein. Dieser Fehler sollte aus Sicherheitsgründen in jedem Fall vermieden werden.

## Patentansprüche

1. Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, mit
• einem mittels eines Bremspedals (1) betätigbaren Hauptbremszylinder (2) mit zumindest einem Kolben (15, 16) und zumindest einem Druckraum (17, 18), an welchen ein Bremskreis (I, II) mit Radbremsen (8, 9, 10, 11) anschließbar oder angeschlossen ist,
• einer elektrisch steuerbaren Druckbereitstellungseinrichtung (5) zur Betätigung der Radbremsen, und
• einer Simulationseinrichtung (3) mit zumindest einem elastischen Element (33), welche in der "Brake-by-wire"-Betriebsart dem Fahrzeugführer ein angenehmes Bremspedalgefühl vermittelt, wobei die Simulationseinrichtung (3) eine hydraulische Simulatorkammer (29) aufweist, welche über eine erste hydraulische Verbindung (54) mit dem Druckraum (17) des Hauptbremszylinders (2) hydraulisch verbunden oder verbindbar ist und welche mittels eines elektrisch betätigbaren Abtrennventils (28) trennbar mit einem unter Atmosphärendruck stehenden Druckmittelvorratsbehälter (4) in Verbindung steht (46), **dadurch gekennzeichnet, dass** in der Verbindung (46) zwischen der Simulatorkammer (29) und dem Abtrennventil (28) ein Medientrennmittel (47) angeordnet ist.

2. Bremsanlage nach Anspruch 1, **dadurch gekennzeichnet, dass** das Medientrennmittel (47) einen ersten hydraulischen Raum (48) zur Aufnahme von Druckmittel umfasst, der mittels eines begrenzt bewegbaren oder deformierbaren Medientrennelements (49) von einem zweiten hydraulischen Raum (51) getrennt wird, wobei der zweite hydraulische Raum (51) mit dem Abtrennventil (28) hydraulisch verbunden (46) ist.

3. Bremsanlage nach Anspruch 2, **dadurch gekennzeichnet, dass** der erste Raum (48) mit der Simulatorkammer (29) hydraulisch verbunden ist und mit dem Druckraum (17) hydraulisch verbunden oder verbindbar ist.

4. Bremsanlage nach Anspruch 2 oder 3, **dadurch gekennzeichnet, dass** das Medientrennmittel (47) als eine Zylinder-Trennkolben-Anordnung ausgeführt ist, wobei das Medientrennelement der Trennkolben (49) ist.

5. Bremsanlage nach Anspruch 4, **dadurch gekennzeichnet, dass** in dem zweiten Raum (51) ein, insbesondere vorgespanntes, elastisches Element (52) angeordnet ist, an welchem sich der Trennkolben (49) abstützt.

6. Bremsanlage nach einem der Ansprüche 1 bis 3, **dadurch gekennzeichnet, dass** das Medientrennmittel, insbesondere als Medientrennelement, eine elastische Membran umfasst.

7. Bremsanlage nach einem der Ansprüche 1 bis 6, **dadurch gekennzeichnet, dass** das Abtrennventil (28) in einer zweiten hydraulischen Verbindung (41a) zwischen dem Druckraum (17) und dem Druckmittelvorratsbehälter (4) angeordnet ist.

8. Bremsanlage nach Anspruch 7, **dadurch gekennzeichnet, dass** die Simulatorkammer (29) mit der zweiten hydraulischen Verbindung (41a) zwischen dem Druckraum (17) und dem Abtrennventil (28) in Verbindung steht.

9. Bremsanlage nach einem der Ansprüche 1 bis 8, **dadurch gekennzeichnet, dass** die erste hydraulische Verbindung (54) mittels eines elektrisch betätigbaren Simulatorfreigabeventils (32) zu- und abschaltbar ausgeführt ist.

10. Verfahren zum Betrieb einer Bremsanlage vom Typ "Brakeby-wire" mit einem Bremspedal-betätigbaren Hauptbremszylinder (2) mit zumindest einem Druckraum (17, 18), an welchen ein Bremskreis (I, II) mit Radbremsen (8, 9, 10, 11) anschließbar oder angeschlossen ist, und einer Simulationseinrichtung (3), welche in der "Brake-by-wire"-Betriebsart dem Fahrzeugführer ein angenehmes Bremspedalgefühl vermittelt, wobei die Simulationseinrichtung (3) eine hydraulische Simulatorkammer (29) umfasst, welche mit dem Druckraum (17) des Hauptbremszylinders (2) hydraulisch verbunden oder verbindbar ist und welche mittels eines elektrisch betätigbaren Abtrennventils (28) trennbar mit einem unter Atmosphärendruck stehenden Druckmittelvorratsbehälter (4) in Verbindung steht (46), insbesondere zum Betrieb einer Bremsanlage nach einem der Ansprüche 1 bis 9, bei welchem zur Änderung einer Kraft-Weg-Kennlinie einer Bremspedalbetätigung Druckmittel über das Abtrennventil (28) in den Druckmittelvorratsbehälter (4) verschoben wird, **dadurch gekennzeichnet, dass** auch bei offenem Abtrennventil (28) die Menge von in den Druckmittelvorratsbehälter (4) verschobenem Druckmittel durch ein zwischen der Simulatorkammer (29) und dem Abtrennventil (28) angeordnetes Medientrennmittel (47) auf eine vorgegebene Maximalmenge begrenzt wird.

11. Verfahren nach Anspruch 10, **dadurch gekennzeichnet, dass** bei Vorliegen einer vorgegebenen Bedingung, insbesondere bei Wahl einer ersten Auswahlmöglichkeit durch den Fahrzeugführer über eine HMI-Schnittstelle, das Abtrennventil (28) bei einer Betätigung des Bremspedals während der gesamten Bremsung nicht geschlossen wird.

12. Verfahren nach Anspruch 10 oder 11, **dadurch gekennzeichnet, dass** bei Vorliegen einer vorgegebenen Bedingung, insbesondere bei Wahl einer zweiten Auswahlmöglichkeit durch den Fahrzeugführer über eine HMI-Schnittstelle, das Abtrennventil (28) bei einer Betätigung des Bremspedals unmittelbar geschlossen wird, und insbesondere während der gesamten Bremsung geschlossen bleibt.

13. Verfahren nach einem der Ansprüche 10 bis 12, **dadurch gekennzeichnet, dass** in Abhängigkeit von einer Wahl des Fahrzeugführers über eine HMI-Schnittstelle und/oder in Abhängigkeit von einer fahrdynamischen Größe und/oder in Abhängigkeit von einem Signal einer Steuer- und/oder Regeleinheit des Kraftfahrzeugs, in welcher insbesondere eine Gefahrenerkennung durchgeführt wird, bei einer Betätigung des Bremspedals das Abtrennventil (28) zur Verkürzung des Bremspedalwegs geschlossen wird.

## Claims

1. Braking system for motor vehicles, which, in a "brake by wire" operating mode, can be controlled both by the vehicle driver and independently of the vehicle driver, and is preferably operated in the "brake by wire" operating mode and can be operated in at least one fallback operating mode, having
• a brake master cylinder (2), which can be actuated by means of a brake pedal (1) and has at least one piston (15, 16) and at least one pressure chamber (17, 18), to which a brake circuit (I, II) containing wheel brakes (8, 9, 10, 11) can be connected or is connected,
• an electrically controllable pressure supplying device (5) for actuating the wheel brakes, and
• a simulation device (3) having at least one elastic element (33), which provides an acceptable brake pedal feel to the vehicle driver in the "brake by wire" operating mode, wherein the simulation device (3) has a hydraulic simulator chamber (29), which can be hydraulically connected, or is hydraulically connected, via a first hydraulic connection (54) to the pressure chamber (17) in the brake master cylinder (2) and which is in a separable communication (46) by means of an electrically actuated isolation valve (28) with a pressure medium reservoir (4) under atmospheric pressure,
**characterized in that** a media separating means (47) is arranged in the connection (46) between the simulator chamber (29) and the isolation valve (28).

2. Braking system according to Claim 1, **characterized in that** the media separating means (47) comprises a first hydraulic chamber (48) for receiving pressure medium, which is separated from a second hydraulic chamber (51) by means of a media separating element (49) that can be moved or deformed to a limited extent, wherein the second hydraulic chamber (51) is hydraulically connected (46) to the isolation valve (28).

3. Braking system according to Claim 2, **characterized in that** the first chamber (48) is hydraulically connected to the simulator chamber (29) and is hydraulically connected or can be hydraulically connected to the pressure chamber (17).

4. Braking system according to Claim 2 or 3, **characterized in that** the media separating means (47) is embodied as a cylinder/separating piston arrangement, wherein the media separating element is the separating piston (49).

5. Braking system according to Claim 4, **characterized in that** an elastic element (52), in particular a preloaded elastic element, on which the separating piston (49) is supported, is arranged in the second chamber (51).

6. Braking system according to one of Claims 1 to 3, **characterized in that** the media separating means, in particular in the role of media separating element, comprises a flexible diaphragm.

7. Braking system according to one of Claims 1 to 6, **characterized in that** the isolation valve (28) is arranged in a second hydraulic connection (41a) between the pressure chamber (17) and the pressure medium reservoir (4).

8. Braking system according to Claim 7, **characterized in that** the simulator chamber (29) is in communication with the second hydraulic connection (41a) between the pressure chamber (17) and the isolation valve (28).

9. Braking system according to one of Claims 1 to 8, **characterized in that** the first hydraulic connection (54) is embodied in such a way that it can be opened and closed by means of an electrically actuated simulator enable valve (32).

10. Method for the operation of a braking system of the "brake by wire" type having a brake master cylinder (2), which can be actuated by means of a brake pedal and has at least one pressure chamber (17, 18), to which a brake circuit (I, II) containing wheel brakes (8, 9, 10, 11) can be connected or is connected, and a simulation device (3), which provides an acceptable brake pedal feel to the vehicle driver in the "brake by wire" operating mode, wherein the simulation device (3) has a hydraulic simulator chamber (29), which can be hydraulically connected, or is hydraulically connected, to the pressure chamber (17) in the brake master cylinder (2) and which is in a separable communication (46) by means of an electrically actuated isolation valve (28) with a pressure medium reservoir (4) under atmospheric pressure, in particular for the operation of a braking system according to one of Claims 1 to 9, in which pressure medium is displaced into the pressure medium reservoir (4) via the isolation valve (28) in order to modify a force/displacement characteristic curve of a brake pedal actuation, **characterized in that** the quantity of pressure medium displaced into the pressure medium reservoir (4) is limited to a predetermined maximum quantity by a media separating means (47) arranged between the simulator chamber (29) and the isolation valve (28), even when the isolation valve (28) is open.

11. Method according to Claim 10, **characterized in that**, when a predetermined condition is present, in particular when a first option has been chosen by the vehicle driver via an HMI interface, the isolation valve (28) is not closed during the entire braking operation when the brake pedal is actuated.

12. Method according to Claim 10 or 11, **characterized in that**, when a predetermined condition is present, in particular when a second option has been chosen by the vehicle driver via an HMI interface, the isolation valve (28) is immediately closed when the brake pedal is actuated, and, in particular, remains closed during the entire braking operation.

13. Method according to one of Claims 10 to 12, **characterized in that**, when the brake pedal is actuated, the isolation valve (28) is closed to shorten the brake pedal travel in accordance with a choice of the vehicle driver via an HMI interface and/or in accordance with a variable relating to driving dynamics and/or in accordance with a signal from an open-loop and/or closed-loop control unit in the motor vehicle, in which unit hazard detection, in particular, is performed.

## Revendications

1. Installation de freinage pour véhicules automobiles, ladite installation pouvant être commandée dans un mode de fonctionnement de type « à frein câblé » tant par le conducteur du véhicule qu'indépendamment du conducteur du véhicule, ladite installation étant de préférence entraînée dans le mode de fonctionnement de type « à frein câblé » et pouvant être entraînée dans au moins un mode de fonctionnement de coupure, avec :
• un maître-cylindre de frein (2) actionnable à l'aide d'une pédale de frein (1) avec au moins un piston (15, 16) et au moins une chambre de pression (17, 18) au niveau de laquelle un circuit de freinage (I, II) est raccordé ou peut être raccordé à des freins de roue (8, 9, 10, 11) ;
• un dispositif de mise à disposition de pression (5) à commande électrique servant à actionner les freins de roue ; et
• un dispositif de simulation (3) avec au moins un élément élastique (33), ledit dispositif transmettant au conducteur du véhicule une sensation de pédale de frein agréable dans le mode de fonctionnement de type « à frein câblé », le dispositif de simulation (3) comportant une chambre de simulation (29) hydraulique reliée ou pouvant être reliée sur le plan hydraulique, via une première liaison hydraulique (54), à la chambre de pression (17) du maître-cylindre de frein (2) et étant en liaison (46), de façon séparable par le biais d'une soupape coupante (28) à action électrique, d'un réservoir de moyen de pression (4) sous pression atmosphérique ;
**caractérisée en ce qu'**un moyen de séparation d'agents (47) est disposé dans la liaison (46), entre la chambre de simulation (29) et la soupape coupante (28).

2. Installation de freinage selon la revendication 1, **caractérisée en ce que** le moyen de séparation d'agents (47) comprend une première chambre hydraulique (48) servant à recevoir le moyen de pression pouvant être séparé d'une deuxième chambre hydraulique (51) à l'aide d'un élément de séparation d'agents (49) pouvant se déplacer ou se déformer de façon limitée, la deuxième chambre hydraulique (51) étant reliée (46) sur le plan hydraulique à la soupape coupante (28).

3. Installation de freinage selon la revendication 2, **caractérisée en ce que** la première chambre (48) est reliée sur le plan hydraulique à la chambre de simulation (29) et est reliée ou peut être reliée sur le plan hydraulique à la chambre de pression (17).

4. Installation de freinage selon la revendication 2 ou 3, **caractérisée en ce que** le moyen de séparation d'agents (47) est réalisé sous la forme d'un agencement de cylindre-piston séparateur, l'élément de séparation d'agents étant le piston séparateur (49).

5. Installation de freinage selon la revendication 4, **caractérisée en ce qu'**un élément élastique (52), notamment précontraint, est disposé dans la deuxième chambre (51), le piston séparateur (49) appuyant contre ledit élément.

6. Installation de freinage selon l'une quelconque des revendications 1 à 3, **caractérisée en ce que** le moyen de séparation d'agents comprend une membrane élastique, notamment réalisée sous la forme d'un élément de séparation d'agents.

7. Installation de freinage selon l'une quelconque des revendications 1 à 6, **caractérisée en ce que** la soupape coupante (28) est disposée dans une deuxième liaison hydraulique (41a) entre la chambre de pression (17) et le réservoir de moyen de pression (4).

8. Installation de freinage selon la revendication 7, **caractérisée en ce que** la chambre de simulation (29) est reliée à la deuxième liaison hydraulique (41a) entre la chambre de pression (17) et la soupape coupante (28).

9. Installation de freinage selon l'une quelconque des revendications 1 à 8, **caractérisée en ce que** la première liaison hydraulique (54) est réalisée de façon à pouvoir être ouverte et fermée à l'aide d'une soupape de déclenchement de simulateur (32) à action électrique.

10. Procédé pour faire fonctionner une installation de freinage du type à « frein câblé » avec un maître-cylindre de frein (2) actionnable par pédale de frein avec au moins une chambre de pression (17, 18) à laquelle un circuit de freinage (I, II) est raccordé ou peut être raccordé à des freins de roue (8, 9, 10, 11) et avec un dispositif de simulation (3) transmettant au conducteur du véhicule une sensation de pédale de frein agréable dans le mode de fonctionnement de type « à frein câblé », le dispositif de simulation (3) comprenant une chambre de simulation (29) hydraulique reliée ou pouvant être reliée sur le plan hydraulique à la chambre de pression (17) du maître-cylindre de frein (2) et étant en liaison (46), de façon séparable par le biais d'une soupape coupante (28) à action électrique, d'un réservoir de moyen de pression (4) sous pression atmosphérique, notamment pour faire fonctionner une installation de freinage selon l'une quelconque des revendications 1 à 9, dans laquelle pour modifier une courbe caractéristique course-effort d'un actionnement de pédale de frein, le moyen de pression est poussé dans le réservoir de moyen de pression (4) via la soupape coupante (28), **caractérisé en ce que** la quantité de moyen de pression poussée dans le réservoir de moyen de pression (4) est limitée à une quantité maximale prédéfinie par un moyen de séparation d'agents (47) disposé entre la chambre de simulation (29) et la soupape coupante (28), et ce également lorsque la soupape coupante (28) est ouverte.

11. Procédé selon la revendication 10, **caractérisé en ce qu'**en présence d'une condition prédéfinie, notamment en cas de sélection d'une première possibilité de sélection par le conducteur du véhicule via une interface HMI, la soupape coupante (28) n'est pas fermée par un actionnement de la pédale de frein pendant la totalité du freinage.

12. Procédé selon la revendication 10 ou 11, **caractérisé en ce qu'**en présence d'une condition prédéfinie, notamment en cas de sélection d'une deuxième possibilité de sélection par le conducteur du véhicule via une interface HMI, la soupape coupante (28) est directement fermée en cas d'actionnement de la pédale de frein et que celle-ci reste fermée notamment pendant la totalité du freinage.

13. Procédé selon l'une quelconque des revendications 10 à 12, **caractérisé en ce qu'**en fonction d'une sélection du conducteur du véhicule via une interface HMI et/ou en fonction d'une grandeur de dynamique de conduite et/ou en fonction d'un signal d'une unité de commande et/ou de réglage du véhicule automobile effectuant notamment une identification des risques, la soupape coupante (28) est fermée pour raccourcir la course de pédale de frein en cas d'actionnement de la pédale de frein.
